# EUROPÄISCHE PATENTANMELDUNG

(11) **EP 4 670 818 A1**
(43) Veröffentlichungstag der Anmeldung: **31.12.2025**
(21) Anmeldenummer: 25182418.1
(22) Anmeldetag: 12.06.2025
(51) Int. Cl.: B01D 46/62, B01D 46/66, B01D 46/90, B01D 50/20

(54) **ANLAGE ZUM ENTFERNEN VON PARTIKELN, INSBESONDERE STÄUBEN, AUS EINEM GASSTROM SOWIE VERFAHREN ZUM ENTFERNEN VON PARTIKELN, INSBESONDERE STÄUBEN, AUS EINEM GASSTROM**

(30) Priorität: 27.06.2024 DE 102024002148
(71) Anmelder: Camfil APC GmbH, 78532 Tuttlingen (DE)
(72) Erfinder: Handte, Jakob, 8598 Bottighofen (CH); Haist, Ralf, 88662 Überlingen (DE); Maier, Gerard, 70771 Leinfelden/Echterdingen (DE); Schweigert, Bernd, 88690 Uhldingen (DE); Katzenwadel, Jürgen, 73614 Schorndorf (DE)
(74) Vertreter: Patentanwälte Jackisch-Kohl und Kohl

(57) **Zusammenfassung**

Die Anlage sowie das Verfahren dienen zum Entfernen von Partikeln, insbesondere Stäuben, aus einem Gasstrom. Die Anlage weist mindestens einen regenerierbaren Abscheider (16) auf, an den eine Zuführleitung (1) für den Gasstrom und eine Auslassleitung (18) für den Gasstrom angeschlossen sind. Um die Anlage und das Verfahren so auszubilden, dass Partikel, insbesondere Stäube, aus Gasströmen in einfacher Weise und ohne großen konstruktiven Aufwand entfernt werden können, ist an den regenerierbaren Abscheider (16) wenigstens ein nicht regenerierbarer Abscheider (21 bis 23) angeschlossen, der während einer Regenerierung unter Umgehung des regenerierbaren Abscheiders (16) mit der Zuführleitung (1) verbindbar ist. Mit der Anlage kann im Normalfall der Gasstrom zunächst durch den regenerierbaren Abscheider (16) geführt werden, mit dem eine große Menge an Partikeln aus dem Gasstrom entfernt werden kann. Anschließend gelangt der so bereits weitgehend gereinigte Gasstrom in den nicht regenerierbaren Abscheider (21 bis 23), in dem die restlichen geringen Anteile von Partikeln aus dem Gasstrom entfernt werden.

## Beschreibung

Die Erfindung betrifft eine Anlage zum Entfernen von Partikeln nach dem Oberbegriff des Anspruches 1 sowie ein Verfahren zum Entfernen von Partikeln nach dem Oberbegriff des Anspruches 10.

Um Partikel aus Gasströmen zu entfernen, ist es bekannt, die Gasströme durch regenerierbare Abscheider zu leiten. Sie enthalten wenigstens ein Filterelement, das gasdurchlässig ist und die im Gasstrom enthaltenen Partikel zurückhält. Die Partikel setzen sich am Filterelement ab und bilden einen Filterrückstand, der von Zeit zu Zeit entfernt werden muss, um die Filterwirkung aufrechtzuerhalten. Während dieser Regenerierung steht der Abscheider allerdings nicht zur Verfügung. Darum sind solche Anlagen häufig so aufgebaut, dass sie wenigstens zwei solcher regenerierbarer Abscheider aufweisen. Dann kann der eine Abscheider in Betrieb bleiben, während der andere Abscheider regeneriert wird. Dies führt allerdings zu einer Verteuerung der Anlage sowie auch zu einer Erhöhung des Platzbedarfs.

Es sind weiter Abscheider bekannt, die nicht regeneriert werden, sondern bei entsprechender Filterbelastung ausgetauscht werden. Solche nicht regenerierbaren Abscheider sind beispielsweise Speicherfilter. Sie werden dort eingesetzt, wo der Anteil an Partikeln im Gasstrom verhältnismäßig gering ist. Ein typisches Anwendungsgebiet ist die Entstaubungstechnik, bei der Stäube aus dem Gasstrom entfernt werden. Damit bei einem Austausch der Speicherfilter der Anlagenbetrieb nicht unterbrochen werden muss, sind in der Regel mehrere Speicherfilter vorgesehen, so dass bei einem Austausch eines Speicherfilters die anderen Speicherfilter in Betrieb bleiben können.

Der Erfindung liegt die Aufgabe zugrunde, die gattungsgemäße Anlage und das gattungsgemäße Verfahren so auszubilden, dass Partikel, insbesondere Stäube, aus Gasströmen in einfacher Weise und ohne großen konstruktiven Aufwand entfernt werden können.

Diese Aufgabe wird bei der gattungsgemäßen Anlage erfindungsgemäß mit den kennzeichnenden Merkmalen des Anspruches 1 und beim gattungsgemäßen Verfahren erfindungsgemäß mit den kennzeichnenden Merkmalen des Anspruches 10 gelöst.

Die erfindungsgemäße Anlage zeichnet sich dadurch aus, dass sie wenigstens einen regenerierbaren sowie wenigstens einen nicht regenerierbaren Abscheider aufweist, die so angeordnet sind, dass im Normalfall der Gasstrom zunächst durch den regenerierbaren Abscheider geführt wird, mit dem eine große Menge an Partikeln aus dem Gasstrom entfernt werden kann. Anschließend gelangt der so bereits weitgehend gereinigte Gasstrom in den nicht regenerierbaren Abscheider, in dem die restlichen geringen Anteile von Partikeln aus dem Gasstrom entfernt werden. Muss der regenerierbare Abscheider regeneriert werden, weil die Belastung des Filters des Abscheiders zu hoch ist, dann wird dieser Abscheider für den Regenerierprozess aus dem Gasstrom herausgenommen, indem die Zuführleitung des partikelbehafteten Gasstromes direkt mit dem nicht regenerierbaren Abscheider verbunden wird. Darum kann ohne Abschalten der Anlage der regenerierbare Abscheider regeneriert werden, der nach dem Regenerierprozess wieder in den Gasstromdurchlauf geschaltet wird.

Die erfindungsgemäße Anlage kommt dort zur Anwendung, wo eine kurzzeitige Umleitung des Gasstromes um den regenerierbaren Abscheider nicht zu einer wesentlichen Standzeitverkürzung des nachgeschalteten nicht regenerierbaren Abscheiders zu erwarten ist. Das trifft zu, wenn die Staubbelastung des Gasstromes relativ gering ist, aber doch noch so hoch ist, dass der Einsatz von nicht regenerierbarem Abscheiden unwirtschaftlich wäre.

Die erfindungsgemäße Anlage zeichnet sich durch ihren konstruktiv einfachen Aufbau aus. Sie benötigt nur wenig Platzbedarf und geringe Investitionskosten. Die Anlage wird insbesondere dort eingesetzt, wo brennbare und explosionsfähige Stäube entstehen bzw. wo die Stäube aufgrund ihrer Partikeleigenschaften (Größe und Gewicht) eine sehr große Filterfläche erfordern. Dann kann eine Regeneration des regenerierbaren Abscheiders ohne Betriebsunterbrechung vorgenommen werden.

Bei einer vorteilhaften Ausführung zweigt von der Zuführleitung für den partikelbehafteten Gasstrom in Strömungsrichtung dieses Gasstromes vor dem regenerierbaren Abscheider eine Bypassleitung ab, welche die Zuführleitung mit der Zuleitung zum nicht regenerierbaren Abscheider verbindet. Über die Bypassleitung kann während des Regenerierprozesses der Gasstrom unter Umgehung des regenerierbaren Abscheiders dem nicht regenerierbaren Abscheider zugeführt werden.

Eine einfache Umgehung des regenerierbaren Abscheiders in einfacher Weise zu ermöglichen, sitzen in der Bypassleitung vorteilhaft zwei Absperrelemente, mit denen der Durchlass des Gasstromes zum regenerierbaren Abscheider bzw. zum nicht regenerierbaren Abscheider wahlweise gesperrt bzw. geöffnet werden kann. Durch Betätigung der Absperrelemente ist es somit in einfacher Weise möglich, den regenerierbaren Abscheider während des Regenerierprozesses zuverlässig und einfach aus dem Strömungsweg des Gasstromes herauszunehmen.

Der nicht regenerierbare Abscheider ist vorteilhaft ein Speicherfilter, ein Partikelfilter und dgl., der kostengünstig ist und einen problemlosen Austausch ermöglicht.

In vorteilhafter Weise ist dem regenerierbaren Abscheider wenigstens ein Grobabscheider vorgeschaltet, der vorteilhaft als Massenkraftabscheider ausgebildet ist. Mit ihm können in wirkungsvoller Weise grobe Partikel aus dem Gasstrom entfernt werden, bevor er dem regenerierbaren Abscheider zugeführt wird.

Eine einfache und kompakte Gestaltung der Anlage ergibt sich, wenn der nicht regenerierbare Abscheider über eine Einlassleitung mit der Auslassleitung des regenerierbaren Abscheiders und über eine Ausgangsleitung mit einer Reingasleitung verbunden ist.

Um die Einlassleitung und die Ausgangsleitung einfach öffnen und schließen zu können, sitzt in diesen Leitungen jeweils wenigstens ein Absperrelement.

Um den regenerierbaren Abscheider einfach regenerieren zu können, ist der regenerierbare Abscheider mit einer Abreinigungseinrichtung für einen Filter des Abscheiders versehen. Mit ihr kann der am Filter haftende Filterrückstand abgeworfen werden, so dass der Filter wieder eine hohe Filterleistung hat.

Vorteilhaft weist die Abreinigungseinrichtung wenigstens eine Druckluftleitung, die in Strömungsrichtung des Gasstromes hinter dem Filter in den Abscheider mündet, und/oder eine Rütteleinrichtung für den Filter auf. Mit der über die Druckluftleitung zugeführten Druckluft und/oder der Rütteleinrichtung lässt sich der regenerierbare Abscheider optimal und zuverlässig regenerieren.

Beim erfindungsgemäßen Verfahren wird der Gasstrom nach dem Austritt aus dem regenerierbaren Abscheider durch wenigstens einen nicht regenerierbaren Abscheider geleitet, in dem Restpartikel, insbesondere Stäube, aus dem Gasstrom entfernt werden, die im regenerierbaren Abscheider noch im Gasstrom verblieben sind. Wenn die Filterleistung des regenerierbaren Abscheiders einen bestimmten Wert unterschreitet, wird der Gasstrom umgeleitet, damit er direkt dem nicht regenerierbaren Abscheider zugeführt wird. Der Gasstrom strömt somit nicht durch den regenerierbaren Abscheider, der dann in einfacher Weise regeneriert werden kann.

Um den Regeneriervorgang zuverlässig durchzuführen, wird die Zuführung des Gasstromes zum und die Ableitung des Gasstromes vom regenerierbaren Abscheider unterbrochen.

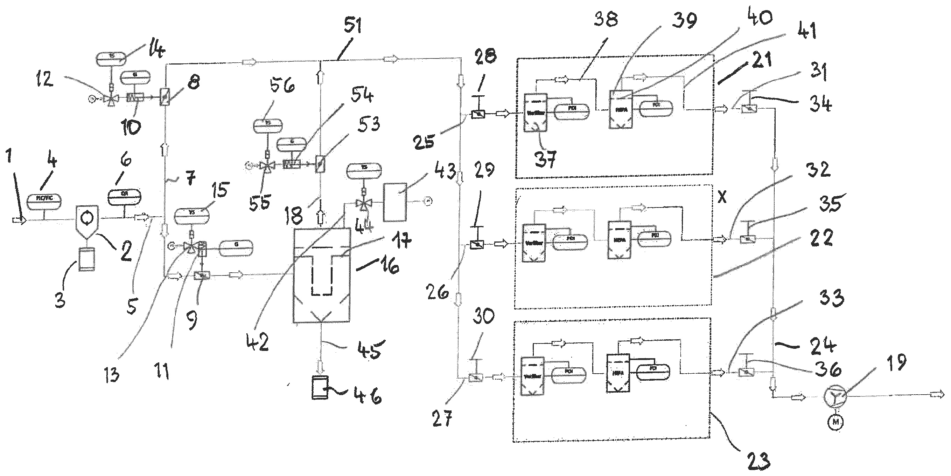

Der Anmeldungsgegenstand ergibt sich nicht nur aus dem Gegenstand der einzelnen Patentansprüche, sondern auch durch die Zeichnung und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Die Erfindung wird anhand eines in der Zeichnung dargestellten Ausführungsbeispieles näher erläutert. Die Zeichnung zeigt einen Schaltplan einer erfindungsgemäßen Anlage zum Abscheiden von Staub und dergleichen.

Die nachfolgend beschriebene Anlage dient dazu, aus einem Rohgas Stäube und andere Partikel zu entfernen.

Der Anlage wird über wenigstens eine Leitung 1 Rohgas zugeführt, das mit Partikeln, wie etwa Staubpartikeln, versehen ist, die aus dem Rohgas zu entfernen sind. Über die Rohgasleitung 1 wird das Rohgas einem ersten Abscheider 2 zugeführt, der vorteilhaft ein Massenkraftabscheider, im Ausführungsbeispiel ein Zyklonabscheider, ist, aber auch jede andere geeignete Ausbildung haben kann. Mit dem ersten Abscheider 2 werden die groben Partikel aus dem Rohgas in bekannter Weise entfernt und in einem Behälter 3 aufgefangen.

An die Rohgasleitung 1 ist in Strömungsrichtung des Rohgases vor dem Abscheider 2 eine Unterdruckmesseinheit 4 angeschlossen, über die ein Ventilator 19 geregelt wird, um z. B. einen konstanten Volumenstrom einzustellen.

Das im Abscheider 2 vorgereinigte Rohgas gelangt in eine Leitung 5, an die wenigstens eine Funkenerkennung 6 angeschlossen ist und die an eine Bypassleitung 7 anschließt. Hier sitzen mit Abstand voneinander zwei Absperrklappen 8 und 9, mit denen die Bypassleitung 7 wahlweise in der einen oder anderen Richtung gesperrt werden kann. Die beiden Absperrklappen 8, 9 können über Druckzylinder 10, 11 betätigt werden. Vorteilhaft sind die Druckzylinder 10, 11 jeweils an ein als Absperrelement dienendes Steuerventil 12, 13 angeschlossen. Je nach Stellung des Steuerventils 12, 13 kann der Druckzylinder 10, 11 mit einem Druckluftspeicher 14, 15 leitungsverbunden werden, wenn die Absperrklappe 8, 9 betätigt werden soll.

Zur Betätigung der Absperrklappen 8, 9 können außer Druckzylindern selbstverständlich andere Betätigungselemente eingesetzt werden. Selbst eine Handverstellung der Absperrklappen 8, 9 ist möglich.

Wenn die Absperrklappe 9 geöffnet und die Absperrklappe 8 geschlossen ist, gelangt das vorgereinigte Rohgas in einen zweiten Abscheider 16, der wenigstens einen Filter 17 aufweist. Das vorgereinigte Rohgas durchströmt den Filter 17, wobei die noch im Gasstrom befindlichen Partikel am Filter 17 hängenbleiben und somit aus dem Gasstrom entfernt werden. Das gereinigte Gas strömt aus dem Abscheider 16 in eine Auslassleitung 18, die an eine als Bypass dienende Leitung 51 angeschlossen ist.

Von der Leitung 51 zweigen Verbindungsleitungen 25 bis 27 ab, mit denen nicht regenerierbare Abscheider 21 bis 23 an die Leitung 51 angeschlossen sind. Die nicht regenerierbaren Abscheider 21 bis 23 können Speicherfilter, Partikelfilter und dgl. sein. In jeder Verbindungsleitung 25 bis 27 sitzt jeweils eine Absperrklappe 28 bis 30, mit welcher der Zugang zu den Abscheidern 21 bis 23 geöffnet oder geschlossen werden kann. Die Abscheider 21 bis 23 sind parallel geschaltet und vorteilhaft gleich ausgebildet.

Für die Anlage reicht je nach Einsatzfall ein nicht regenerierbarer Abscheider aus. Es können auch zwei oder mehr als drei solcher Abscheider zum Einsatz kommen.

Bei geöffneter Absperrklappe 28 bis 30 kann das Gas aus der Leitung 51 durch die Abscheider 21 bis 23 strömen und hierbei von noch eventuell vorhandenen Partikel befreit werden. Nach dem Durchgang durch die Abscheider 21 bis 23 gelangt das nunmehr vollständig gereinigte Gas in Ausgangsleitungen 31 bis 33, welche die Abscheider 21 bis 23 mit einer Reingasleitung 24 verbinden und in denen jeweils eine Absperrklappe 34 bis 36 sitzt.

Mit den Absperrklappen 34 bis 36 können die Ausgangsleitungen 31 bis 33 geschlossen oder geöffnet werden.

Da die Abscheider 21 bis 23 im Ausführungsbeispiel gleich ausgebildet sind, wird lediglich der Abscheider 21 näher beschrieben. Er hat vorteilhaft einen Vorfilter 37, der an die Verbindungsleitung 25 angeschlossen ist. Das über die Verbindungsleitung 25 zuströmende Gas wird im Vorfilter 37 gereinigt und gelangt über eine Leitung 38 in einen Abscheider 39 zur Feinfilterung. Der Abscheider 39 enthält als Filterelement 40 vorteilhaft einen Hepafilter, mit dem eine Feinfilterung erreicht wird. Das Gas gelangt anschließend in eine Leitung 41, die mit der Ausgangsleitung 31 strömungsverbunden ist.

Die beschriebene Anlage hat den wenigstens einen regenerierbaren Abscheider 16 und den wenigstens einen nachgeschalteten nicht regenerierbaren Abscheider 21 bis 23. Soll der Abscheider 16 gereinigt werden, dann wird er aus dem Strömungsweg des Gasstromes herausgenommen, der dann durch die Abscheider 21 bis 23 während der Reinigung des Abscheiders 16 geleitet wird. Die Anlage ist bei Anwendungen geeignet, bei denen eine kurze Unterbrechung bzw. Umleitung des regenerierbaren Abscheiders 16 nicht zu einer wesentlichen Standzeitverkürzung der nachgeschalteten Abscheider 21 bis 23 führt. Dies gilt, wenn einerseits die Staubbelastung relativ gering, aber andererseits auch so hoch ist, dass der Einsatz von nicht regenerierbaren Abscheidern allein unwirtschaftlich wäre.

Unter anderem dient das mit der Anlage durchgeführte Verfahren dazu, bei brennbaren und explosiven Stäuben einen tertiären Explosionsschutz durch die offline-Abreinigung zu umgehen.

Um das über die Rohgasleitung 1 zugeführte Rohgas zu reinigen, wird die Absperrklappe 9 geöffnet, während die Absperrklappe 8 geschlossen bleibt. Dadurch gelangt das Rohgas nach dem Durchtritt durch den Abscheider 2 über die Bypassleitung 7 in den Abscheider 16. Das gereinigte Rohgas gelangt über die Auslassleitung 18 zu den Abscheidern 21 bis 23, wobei die Absperrklappen 28 bis 30 geöffnet sind, so dass der Gasstrom in jeden der Abscheider über die Verbindungsleitungen 25 bis 27 strömen kann. In den Abscheidern 21 bis 23 werden eventuell noch im Gasstrom enthaltene feinste Partikel zurückgehalten. Das dann erhaltene Reingas gelangt über die Ausgangsleitungen 31 bis 33, in denen die Absperrklappen 34 bis 36 geöffnet sind, in die Reingasleitung 24. Das auf diese Weise erhaltene Reingas wird dann geeigneter Weise weitergeführt.

In der Auslassleitung 18 sitzt ein Absperrelement 53, das vorteilhaft durch einen druckbetriebenen Druckzylinder 54 betätigt werden kann, um die Auslassleitung 53 zu öffnen oder zu schließen. Der Druckzylinder 54 kann über ein Steuerventil 55 mit einem Druckluftspeicher 56 verbunden werden, wenn er betätigt werden soll.

Das Absperrelement 53 kann auch auf andere geeignete Weise betätigt werden. Auch ein Handbetrieb kommt in Betracht.

Je nach Anwendungsfall ist es möglich, nur einen oder zwei der Abscheider 21 bi 23 freizuschalten, so dass der aus dem Abscheider 16 austretende Gasstrom nicht durch alle drei Abscheider 21 bis 23 strömt. Mit den Absperrklappen 28 bis 30 und 34 bis 36 können die entsprechenden Abscheider 21 bis 23 bedarfsweise gesperrt werden.

Wenn die Abscheider 21 bis 23 zugesetzt sind, werden sie in bekannter Weise ausgetauscht. Die auszutauschenden Abscheider werden durch Schließen der entsprechenden Absperrklappen 28 bis 30; 34 bis 36 aus dem Gasstrom herausgenommen, so dass ein einfacher Austausch der Abscheider möglich ist. Während des Austausches bleiben die anderen Abscheider 21 bis 23 und der Abscheider 16 in Betrieb, so dass die Feinfilterung des Gasstromes nicht unterbrochen werden muss.

Im Abscheider 16 bleiben die aus dem Rohgasstrom herausgefilterten Partikel am Filterelement 17 hängen. Der dadurch gebildete Filterrückstand wird durch eine Druckluftbeaufschlagung des Filterelementes 17 in bekannter Weise entfernt. Hierzu wird Druckluft über eine Druckluftleitung 42 entgegengesetzt zum Gasstrom in den Abscheider 16 geblasen. Die Druckluft wird in einem Druckluftbehälter 43 vorgehalten, an den die Druckluftleitung 42 angeschlossen ist. Mit Hilfe eines Arbeitsventils 44 kann die Druckluftleitung 42 geöffnet bzw. geschlossen werden.

Durch die Druckluft wird der an der Außenseite des Filterelementes 17 anhaftende Filterrückstand abgeblasen, so dass er im Abscheider 16 nach unten fällt. Über eine Absaugleitung 45 wird der Filterrückstand aus dem Abscheider 16 abgesaugt und in einen Behälter 46 gefördert. Die Absaugleitung 45 kann durch eine (nicht dargestellte) Absperrklappe geschlossen werden, wenn der Filterrückstand nicht aus dem Abscheider 16 entfernt werden soll. Die Absperrklappe kann in vorteilhafter Weise mit einem Druckzylinder betätigt werden, der über einen Schalter mit einem Druckluftspeicher verbunden werden kann.

Die Abreinigung des Filterelementes 17 kann auch mit Hilfe einer Rütteleinrichtung durchgeführt werden, bei der das Filterelement 17 in solche Schwingungen versetzt wird, dass der Filterrückstand abgeworfen wird. Die Rütteleinrichtung kann auch zusammen mit der beschriebenen Druckluftreinigung eingesetzt werden.

Um die Abreinigung des Filterelementes 17 im Abscheider 16 durchführen zu können, wird die Absperrklappe 9 in ihre Schließstellung verstellt, während die Absperrklappe 8 in ihre Offenstellung verstellt wird. Dadurch gelangt der Rohgasstrom nach dem Durchtritt durch den Abscheider 2 über die Bypassleitung 7 in die Leitung 51. Von hier aus kann der Gasstrom je nach Stellung der Absperrklappen 28 bis 30 durch einen oder mehrere Abscheider 21 bis 23 geleitet werden, um die im Gasstrom noch befindlichen Partikel herauszufiltern. Da der Abreinigungsprozess im Abscheider 16 nicht lange dauert und der Partikelanteil im Gasstrom relativ gering ist, werden die Abscheider 21 bis 23 während des Abreinigungsprozesses nicht unnötig stark belastet. Da in den Abscheidern 21 bis 23 mittels der Vorfilter 37 und der Abscheider 39 eine zweistufige Filterung stattfindet, enthält das aus den Abscheidern 21 bis 23 herausströmende Reingas zumindest etwa den gleichen Reinheitsgrad, als wenn das Rohgas zusätzlich noch durch den Abscheider 16 geleitet worden wäre.

Über die Absaugleitung 45 werden die beim Abscheidevorgang anfallenden Filterrückstände zuverlässig abgeführt. Sobald der Abreinigungsprozess beendet ist, wird mit Hilfe des Arbeitsventils 44 die Druckluftleitung 42 geschlossen und die Absperrklappe 9 geöffnet. Die Absperrklappe 8 wird wieder in ihre Schließstellung gebracht. Auf diese Weise wird das über die Rohgasleitung 1 zugeführte Rohgas durch den Abscheider 2, den Abscheider 16 sowie durch den wenigstens einen Abscheider 21 bis 23 geführt. Der gereinigte Gasstrom wird dann als Reingas über die Reingasleitung 24 abgeführt.

Die beschriebene Anlage zeichnet sich durch ihren einfachen Aufbau aus. Sie kommt insbesondere im Bereich der Aspiration von brennbaren und explosionsfähigen Stäuben zum Einsatz bzw. bei Stäuben, die aufgrund ihrer Partikeleigenschaften (Größe und Gewicht) eine extrem große Filterfläche erfordern, damit eine Regeneration der Filterelemente ohne Betriebsunterbrechung erfolgreich erreicht werden kann. Es sind keine redundanten Systeme notwendig, um eine Offline-Abreinigung bzw. Regneration durchführen zu können. Aufgrund der einfachen Gestaltung der Anlage wird auch der Platzbedarf erheblich verringert. Zudem führt die geringe Komplexität der Anlage auch zu geringeren Investitionskosten. Durch die Offline-Regenerierung des Abscheiders 16 ergibt sich eine Maximierung der Filterflächenbelastung.

Aufgrund des vorgeschalteten abreinigbaren Abscheiders 16, der zum Zeitpunkt des Abreinigungsvorganges über den Bypass 51 umfahren wird, wird die Standzeit der nachgeschalteten nicht regenerierbaren Abscheider 21 bis 23 maßgeblich erhöht.

Der Ventilator 19 sitzt im dargestellten Ausführungsbeispiel in der Reingasleitung 24. Diese Lage ist nur beispielhaft zu verstehen. So kann der Ventilator 19 beispielsweise zwischen dem Abscheider 16 und dem nicht regenerierbaren Abscheider 21 oder vor dem Abscheider 16 oder vor dem Massenkraftabscheider 2 angeordnet sein.

## Patentansprüche

1. Anlage zum Entfernen von Partikeln, insbesondere Stäuben, aus einem Gasstrom, mit mindestens einem regenerierbarer Abscheider (16), an den eine Zuführleitung (11) für den Gasstrom und eine Auslassleitung (18) für den Gasstrom angeschlossen sind,
**dadurch gekennzeichnet, dass** an den regenerierbaren Abscheider (16) wenigstens ein nicht regenerierbarer Abscheider (21 bis 23) angeschlossen ist, der während einer Regenerierung unter Umgehung des regenerierbaren Abscheiders (16) mit der Zuführleitung (1) verbindbar ist.

2. Anlage nach Anspruch 1,
**dadurch gekennzeichnet, dass** von der Zuführleitung (1) in Strömungsrichtung des Gasstromes vor dem regenerierbaren Abscheider (16) eine Bypassleitung (7) abzweigt, die die Zuführleitung (1) mit einer Zuleitung (51) zum nicht regenerierbaren Abscheider (21 bis 23) verbindet.

3. Anlage nach Anspruch 2,
**dadurch gekennzeichnet, dass** in der Bypassleitung (7) zwei Absperrelemente (8, 9) sitzen, mit denen der Durchlass des Gasstromes zum regenerierbaren Abscheider (16) bzw. zum nicht regenerierbaren Abscheider (21 bis 23) wahlweise gesperrt bzw. geöffnet werden kann.

4. Anlage nach einem der Ansprüche 1 bis 3,
**dadurch gekennzeichnet, dass** dem regenerierbaren Abscheider (16) wenigstens ein Grobabscheider (2) vorgeschaltet ist.

5. Anlage nach Anspruch 4,
**dadurch gekennzeichnet, dass** der Grobabscheider (2) ein Massenkraftabscheider ist.

6. Anlage nach einem der Ansprüche 1 bis 5,
**dadurch gekennzeichnet, dass** der nicht regenerierbare Abscheider (21 bis 23) über eine Einlassleitung (25 bis 27) mit der Auslassleitung (18) des regenerierbaren Abscheiders (16) und über eine Ausgangsleitung (31 bis 33) mit einer Reingasleitung (24) verbunden ist.

7. Anlage nach Anspruch 6,
**dadurch gekennzeichnet, dass** in der Einlassleitung (25 bis 27) und in der Ausgangsleitung (31 bis 33) jeweils ein Absperrelement (28 bis 30; 34 bis 36) sitzt.

8. Anlage nach einem der Ansprüche 1 bis 7,
**dadurch gekennzeichnet, dass** der regenerierbare Abscheider (16) mit einer Abreinigungseinrichtung (43, 44) für einen Filter (17) des Abscheiders (16) versehen ist.

9. Anlage nach Anspruch 8,
**dadurch gekennzeichnet, dass** die Abreinigungseinrichtung wenigstens eine Druckluftleitung (42), die in Strömungsrichtung des Gasstromes hinter dem Filter (17) in den Abscheider (16) mündet, und/oder eine Rütteleinrichtung für den Filter (17) aufweist.

10. Verfahren zum Entfernen von Partikeln, insbesondere Stäuben, aus einem Gasstrom, insbesondere unter Einsatz einer Anlage nach einem der Ansprüche 1 bis 9, bei dem der Gasstrom durch wenigstens einen regenerierbaren Abscheider (16) geleitet wird, in dem die Partikel aus dem Gasstrom zurückgehalten werden,
**dadurch gekennzeichnet, dass** der Gasstrom nach dem Austritt aus dem regenerierbaren Abscheider (16) durch wenigstens einen nicht regenerierbaren Abscheider (21 bis 23) geleitet wird, in dem Restpartikel aus dem Gasstrom entfernt werden, und dass beim Regenerieren des Abscheiders (16) der Gasstrom so umgelenkt wird, dass er direkt dem nicht regenerierbaren Abscheider (21 bis 23) zugeführt wird.

11. Verfahren nach Anspruch 10,
**dadurch gekennzeichnet, dass** für den Regenerierungsvorgang die Zuführung des Gasstromes zum und die Ableitung vom regenerierbaren Abscheider (16) unterbrochen wird.
